Europäisches Patentamt

European Patent Office

Office européen des brevets

(19)

(11) Veröffentlichungsnummer : **0 310 942 B1**

(12)

# EUROPÄISCHE PATENTSCHRIFT

(45) Veröffentlichungstag der Patentschrift :
30.10.91 Patentblatt 91/44

(51) Int. Cl.$^5$ : **B23B 31/02, B23B 31/26**

(21) Anmeldenummer : **88116079.0**

(22) Anmeldetag : **29.09.88**

(54) **Vorrichtung zum Wechseln und Spannen eines Werkzeugkopfes an der Antriebsspindel einer Werkzeugmaschine.**

(30) Priorität : 08.10.87 DE 3734052

(43) Veröffentlichungstag der Anmeldung :
12.04.89 Patentblatt 89/15

(45) Bekanntmachung des Hinweises auf die
Patenterteilung :
30.10.91 Patentblatt 91/44

(84) Benannte Vertragsstaaten :
AT BE CH DE ES FR GB IT LI LU NL SE

(56) Entgegenhaltungen :
EP-A- 0 185 842
EP-A- 0 224 770
WO-A-85/03467
DE-A- 3 514 829
FR-A- 2 252 891

(73) Patentinhaber : Hertel Aktiengesellschaft
Werkzeuge + Hartstoffe
Wehlauer Strasse 71-73
W-8510 Fürth (DE)

(72) Erfinder : Glaser, Franz
Stadtweg 29
W-8500 Nürnberg (DE)

(74) Vertreter : Tergau, Enno
Patentanwälte Tergau & Pohl Postfach 11 93
47 Hefnersplatz 3
W-8500 Nürnberg 11 (DE)

## Beschreibung

Die Erfindung betrifft eine Vorrichtung mit den im Oberbegriff des Anspruches 1 aufgeführten Merkmalen. Eine solche Vorrichtung ist von der Firma Krupp Widia gmbH als "WIDAFLEX"— System durch offenbundige Vorbenntzung bekannt.

Bei dieser Vorrichtung ist der Werkzeugkopfschaft von radialen Öffnungen zur Aufnahme und zur unmittelbaren Einwirkung der Spannkugeln auf den Werkzeugschaft durchsetzt. Der Werkzeugkopfschaft weist die Umfangsform eines Kegels, insbesondere eines Normkegels auf.

Bei einer aus EP-A-185.842 vorbekannten Spann- und Wechselvorrichtung eines Werkzeugkopfes erfolgt die Spannung ebenfalls durch radiales Auseinanderspreizen von Spannelementen. Diese auf den rohrartigen Werkzeugkopfschaft spreizend einwirkende Spannung indessen verschlechtert den sicheren, schwingungsarmen Zentriersitz des Werkzeugkopfschaftes auf dem Umfang des Spannkopfes.

Der Erfindung liegt die Aufgabe zugrunde, eine Vorrichtung der eingangs genannten Art so auszubilden, daß sie ein schnelles Auswechseln der Werkzeugköpfe beispielsweise auch durch Roboter ermöglicht und trotzdem eine hohe Schwingungssicherheit des gespannten Werkzeugkopfes sowie eine hohe Verschleißfestigkeit gewährleistet. Diese Aufgabe wird durch die Merkmale des Anspruches 1 gelöst.

Durch diese Lösung werden weitgehend Punktkontakte zwischen den für die Spannung und deren Aufrechterhaltung erforderlichen Teilen vermieden. Die Spannvorrichtung hält den gespannten Werkzeugkopf sowohl in radialer als auch in axialer Richtung gespannt, was auch eine hohe Wiederholgenauigkeit der Spannung sicherstellt. Die Druckverteilung läßt sich durch die Wahl des Winkels bestimmen, den die Spannoberflächen der Spannelemente bzw. die von diesen beaufschlagte, innenkonusförmige Seitenwand der Innenringnut des Werkzeugkopfschaftes mit der Achse der Antriebsspindel bildet. Dieser Winkel kann beispielsweise 45° betragen.

Dadurch, daß das erfindungsgemäße Spannprinzip generell von der dem Werkstoffstahl innewohnenden Eigenelastizität Gebrauch macht und die beim Spannvorgang eintretende Deformation des rohrförmigen Werkzeugkopfschaftes in deren elastischem Bereich verbleibt, löst sich bei einer Rückführung der Spannkugeln in ihre Ruhestellung selbsttätig der Klemmkontakt zwischen dem Werkzeugkopfschaft und der Spindelausnehmung.

Durch die Lehre des Anspruches 2 bedarf es keiner gesonderten Rückstelleinrichtung zur Rückführung der Spannelemente in ihre radial innenliegende Ruhestellung. Selbst wenn die Spannelemente beim Einführen des Werkzeugkopfschaftes in die Spindelausnehmung über den Außenumfang des Spannkopfes hinausstehen, wird der Spannvorgang nicht behindert. Diese Wirkung wird durch die Lehre des Anspruches 3 noch vorteilhaft unterstützt.

Bei der Ausführungsform gemäß Anspruch 4 übernimmt der Ringabsatz der Ausnehmung der Arbeitsspindel mit dem entsprechenden Ringvorsprung des Werkzeugkopfschaftes eine Passung zwischen Ausnehmung der Arbeitsspindel und Werkzeugkopfschaft. Dadurch, daß diese Passungsteile im Spannzustand in der Nähe der Stirnfläche der Arbeitsspindel positioniert sind, weisen sie eine große Entfernung vom Einwirkungsbereich der Spannelemente auf. Dadurch unterliegt dieser Passungsbereich keinen vom Spannvorgang ausgehenden Deformationswirkungen. Es kann dadurch ohne Beeinträchtigung der Betriebssicherheit eine besonders enge Passung gewählt werden. Die Positionierung dieser Passungsteile im an die Stirnfläche der Antriebsspindel angrenzenden Vorderbereich der Spindelausnehmung behindert eine enge Passung auch nicht den Wechselvorgang. Die Passung liegt in einem der Werkzeugschneide nächstmöglichen Bereich mit vergleichsweise kleinem Hebelarm. Das Fehlen von Deformationseinwirkungen auf den Ringvorsprung des Werkzeugkopfschaftes wird durch die Lehre nach Anspruch 5 begünstigt.

Die Lehre nach Anspruch 6 dient einer wiederholgenauen, axialen Positionierung des Werkzeugkopfes.

Durch die Lehre nach Anspruch 8 wird ein sicheres Einführen des Werkzeugkopfschaftes in die Spindelausnehmung begünstigt. Auch bei nicht genauem Zusammenfallen der Längsachsen von Werkzeugkopfschaft und Arbeitsspindel ist ein ungehindertes Einfädeln des Werkzeugkopfschaftes in die Spindelausnehmung gewährleistet. In diesem Fall dient die Flankenausbildung gemäß Anspruch 9 ebenfalls zur sicheren Führung des Werkzeugkopfschaftes bei der Wechselbewegung.

Die weiteren Ansprüche befassen sich mit der konstruktiven Ausgestaltung der für die Durchführung des Spannvorganges unmittelbar bestimmten Teile.

Der Gegenstand der Erfindung wird anhand der Figuren näher erläutert. Es zeigen :

Fig. 1    die erfindungsgemäße Spannvorrichtung mit in dieser gespanntem Werkzeugkopf in schematischer Seitenansicht,

Fig. 2    eine vergrößerte Schnittdarstellung entsprechend Fig. 1, bei der die beiderseits der Mittellängsachse liegenden Schnittebenen entsprechend der Schnittführung II-II in Fig. 5 einen Winkel von 120° miteinander bilden und bei der der Werkzeugkopf sich außerhalb der zu seiner Aufnahme bestimmten Spindelausnehmung befindet,

Fig. 3　eine Darstellung entsprechend Fig. 2, wobei jedoch der Werkzeugkopfschaft vollständig in die Spindelausnehmung eingeschoben ist und der eigentliche Spannvorgang beginnt,

Fig. 4　eine Darstellung entsprechend Fig. 2 und 3 in Spannendstellung,

Fig. 5　einen Querschnitt entsprechend der Schnittebene V-V in Fig. 1 und 4,

Fig. 6　eine perspektivische Explosionsdarstellung mit einem Teil des rohrförmigen Endes des Werkzeugkopfschaftes, einem Spannelement, einer Spannkugel, dem zugehörigen Segment des Spannkopfes und dem Spannbereich der Spannstange,

Fig. 7　eine Variante der Ausführungsform gemäß Fig. 1 bis 4, bei welcher an Stelle des gesonderten, zu Passungszwecken dienenden Ringabsatzes im Bereich der Mündung der Spindelausnehmung bzw. eines Ringvorsprunges des Werkzeugkopfschaftes zu Zwecken einer zusätzlichen Zentrierung sowie auch der Drehmomentübertragung eine Hirth-Verzahnung zwischen den Stirnkontaktflächen von Antriebsspindel und Werkzeugkopf wirksam ist.

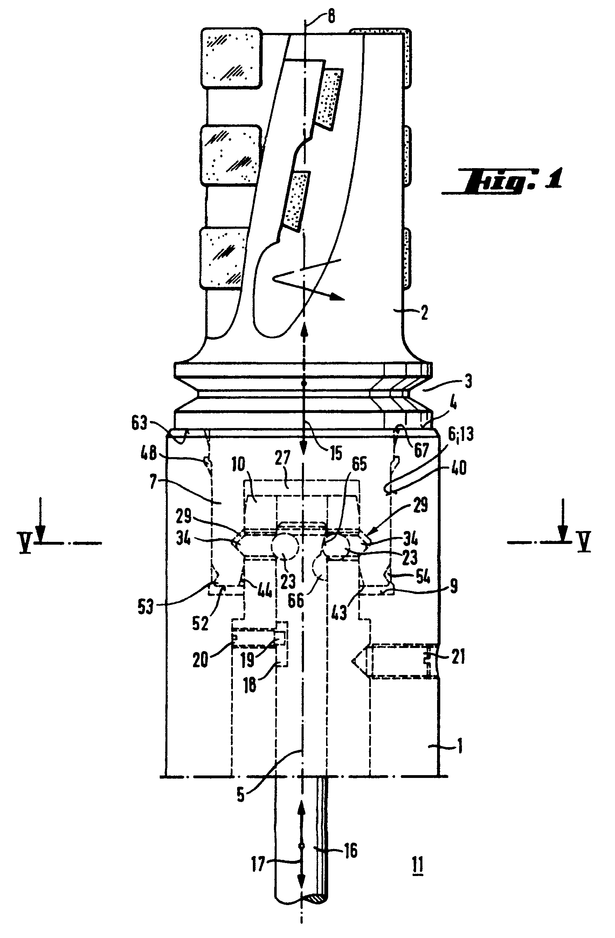

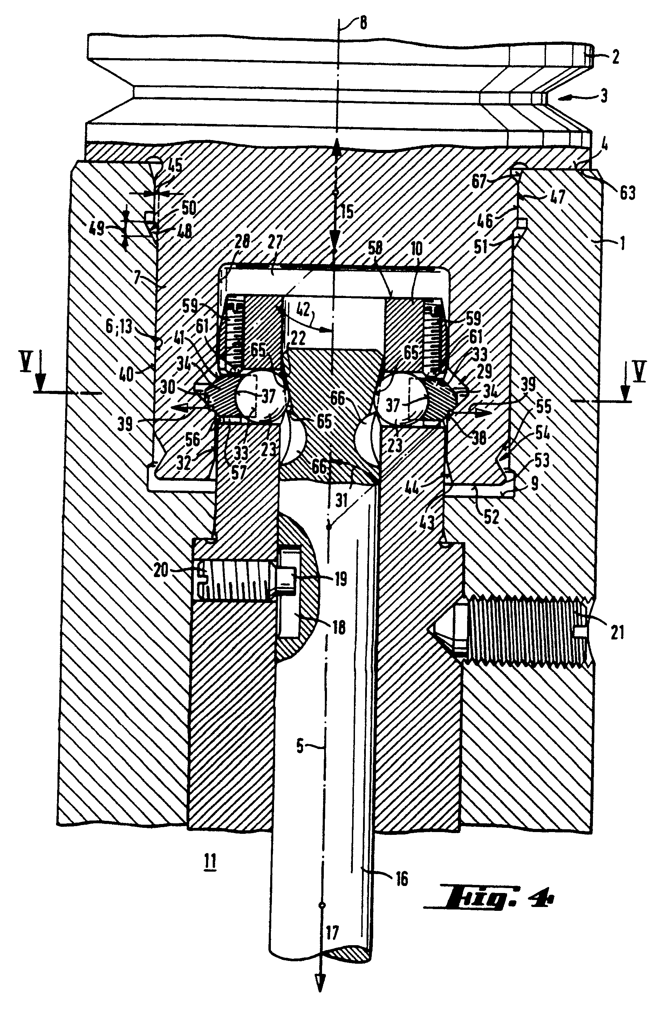

Die erfindungsgemäße Spann- und Wechselvorrichtung ist wirksam zwischen der Antriebsspindel 1 einer im einzelnen nicht dargestellten Werkzeugmaschine und einem daran zu spannenden Werkzeugkopf 2. Der Werkzeugkopf 2 beim Ausführungsbeispiel gemäß Fig. 1 ist ein Fräser. Die den Werkzeugkopf 2 umgebende Griffnut 3, die im Spannzustand (Fig. 1, 4) in Nähe des Freiendes der Antriebsspindel 1 liegt, dient zum Angriff eines Roboterarmes, mit welchem unterschiedliche Werkzeugköpfe 2 nacheinander der Antriebsspindel 1 zugeführt und bei Auswechslung wieder abtransportiert werden.

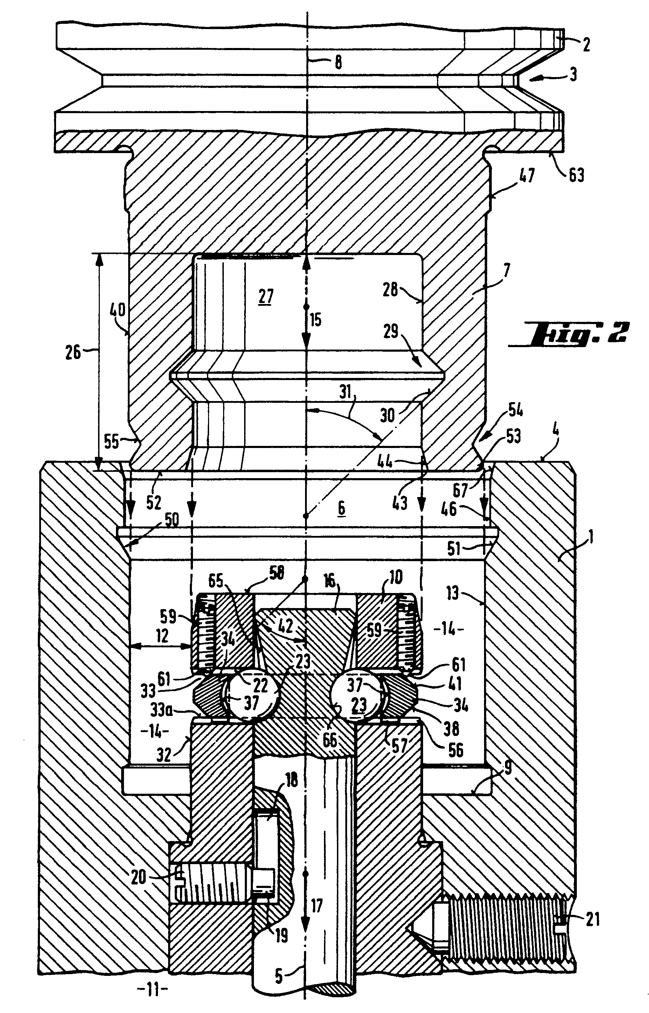

An der Stirnseite 4 der Antriebsspindel 1 ist eine zur Spindeldrehachse 5 koaxiale Ausnehmung 6 für die Aufnahme eines in Axialrichtung vorstehenden Schaftes 7 des Werkzeugkopfes 2 angeordnet. Mit 8 sind die Rotationsachse des Werkzeugkopfes 2 bzw. die Mittellängsachse des Werkzeugkopfschaftes 7 bezeichnet (Fig. 2).

Aus dem Boden 9 der als Sackloch ausgebildeten Ausnehmung 6 steht ein zentrisch angeordneter Spannkopf 10 einer von der Werkzeugmaschinenseite 11 her betätigbaren Spanneinheit hinaus. Dabei ist der Durchmesser des im wesentlichen zylindrischen Spannkopfes 10 so bemessen, daß der Spannkopf um sich herum durch entsprechenden Abstand 12 zur Innenumfangswand 13 der Ausnehmung 6 einen ringförmigen Zwischenraum 14 in der Ausnehmung 6 freihält.

Der Schaft 7 des Werkzeugkopfes 2 ist in Axialrichtung 15 in den ringförmigen Zwischenraum 14 der Spindelausnehmung 6 einführbar und darin durch die Spanneinheit verspannbar.

Der Spannkopf 10 der Spanneinheit lagert eine in Axialrichtung 15 der Antriebsspindel 1 verschiebbare Spannstange 16. Die Spannrichtung der Spannstange 16 ist mit 17 gekennzeichnet. Die Löserichtung ist entgegengesetzt gerichtet. Die Spannstange ist an ihrem Umfang mit einer Längsnut 18 versehen, in die das Einschraubende 19 einer in Radialrichtung in den Spannkopf 10 eingeschraubten Madenschraube 20 eingreift. Dadurch ist die Spannstange 16 undrehbar innerhalb des Spannkopfes 10 gehalten. Der Spannkopf 10 ist als gesondertes Bauteil in die Arbeitsspindel 1 eingesetzt und in seiner Einsatzstellung durch die Fixierschraube 21 gehalten.

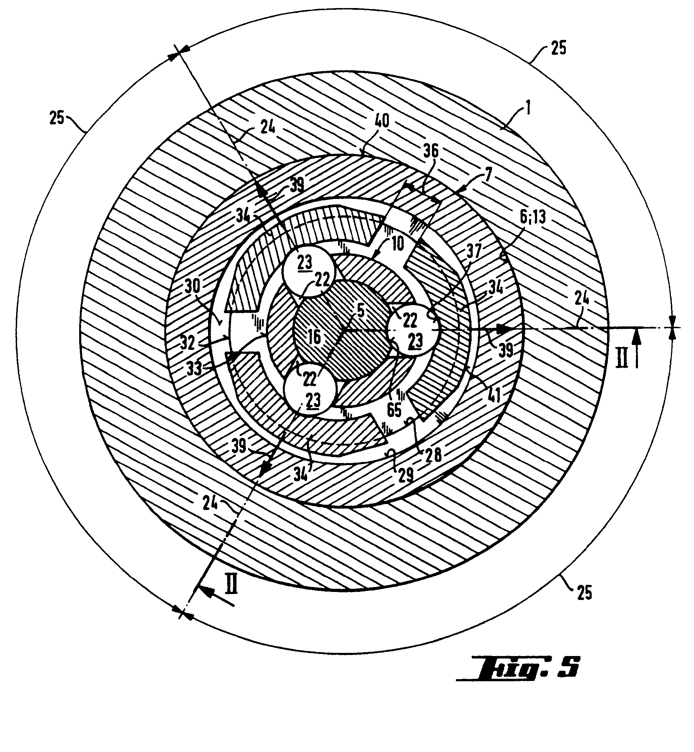

Der Spannkopf 10 ist in seinem in die Ausnehmung 6 hineinstehenden Axialbereich von radialen Führungsbohrungen 22 durchsetzt, in denen jeweils eine Spannkugel 23 einliegt. Insgesamt sind drei Spannkugeln 23 und dementsprechend drei Führungsbohrungen 22 gleichmäßig über den Umfang des Spannkopfes 10 verteilt. Die benachbarten Achsen 24 der Führungsbohrungen 22 bilden daher gemeinsam einen Winkel 25 von jeweils 120° (Fig. 5).

Die Spannkugeln 23 werden durch eine in Spannrichtung 17 vorgenommene axiale Zugbewegung der Spannstange 16 radial nach außen auseinandergespreizt. Sie bewirken damit die Verspannung des Werkzeugkopfes 2 an der Antriebsspindel 1, wie unten näher beschrieben ist.

Der Werkzeugkopfschaft 7 ist in seinem freien Endbereich 26 als Rohrkörper bzw. als zur Rotationsachse 8 konzentrischer Bohrzylinder ausgebildet, dessen Innenraum 27 von einer Innenzylinderfläche 28 umschlossen ist. In die Innenzylinderfläche 28 ist ebenfalls konzentrisch zur Rotationsachse 8 eine Innenringnut 29 eingebracht, die auf ihrer werkzeugmaschinenseitigen Anzugseite eine nach Art eines Innenkonus geneigte Nutseitenwand 30 aufweist. Die Nutseitenwand 30 bildet mit der Rotationsachse 8 bzw. der Spindeldrehachse 5 einen spitzen, sich in Spannrichtung 17 schließenden Winkel 31.

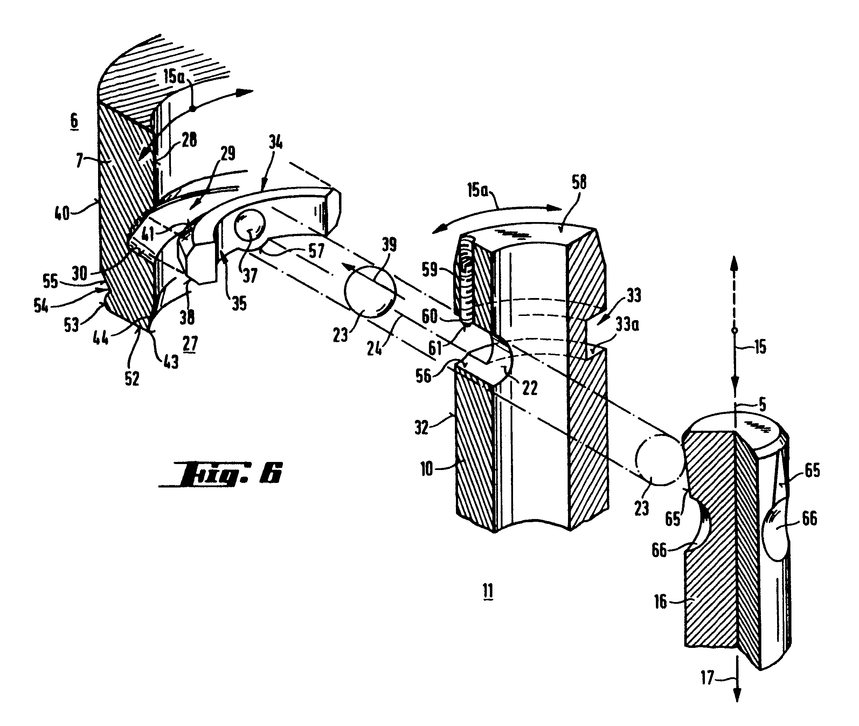

In Höhe der Führungsbohrungen 22 ist in die Umfangsfläche 32 des Spannkopfes 10 eine Ringnut 33 eingebracht, in welcher vertieft und in Axialrichtung 15 und in Umfangsrichtung 15a unverschiebbar (Fig. 6), jedoch in Radialrichtung auseinanderspreizbar drei Spannelemente 34 einliegen. Je ein Spannelement 34 ist an seiner Innenseite 35 von einer Spannkugel 23 beaufschlagt. Die Spannelemente 34 sind ringsegmentartig ausgebildet (Fig. 5, 6). Ihre in Umfangsrichtung 15a weisenden Enden stehen in einem Abstand 36 zueinander. Die Spannkugeln 23 beaufschlagen die Spannelemente 34 in an deren Innenseiten 35 angebrachten Einlagemulden 37 flächenförmig. Die Spannelemente 34 wirken über ihre als Außenkonussegmente geformten Spannoberflächen 38 zur Erzeugung des Spanndruckes auf die Nutseitenwand 30 der Innenringnut 29 des Werkzeugkopfschaftes 7 ein. Bei radialem Auseinanderspreizen der Spannkugeln 23 üben die Spannelemente 34 sowohl einen axial in Spannrichtung 17 als auch einen radial in Spreizrichtung 39 wirkenden Innendruck auf den Werkzeugkopfschaft 7 aus, der sich dadurch leicht elastisch aufweitet und weitgehend flächenförmig mit der Innenumfangswand 13 der Ausnehmung 6 verspannt. Gleichzeitig wird der Werkzeugkopf 2 mit seiner Flanschfläche 63 in Axialrichtung 15 gegen die Stirnseite 4 der Antriebsspindel 1 gepreßt.

Der Außenumfang 40 des Werkzeugkopfschaftes 7 ist als zylindrischer Paßzapfen ausgebildet, der mit Gleitsitz in die als zylindrische Bohrung ausgebildete Ausnehmung 6 der Antriebsspindel 1 einführbar ist. Die Spannelemente 34 sind auf ihrer den Spannoberflächen 38 abgewandten Seite jeweils mit einer konussegmentartigen Fasenfläche 41 versehen, die mit der Rotationsachse 8 bzw. der Spindeldrehachse 5 einen spitzen, sich in Richtung auf den Werkzeugkopf 2 schließenden Winkel 42 bilden.

Der Öffnungsrand 43 des Innenraums 27 des Werkzeugkopfschaftes 2 ist mit einer abgeschrägten Fase 44 versehen.

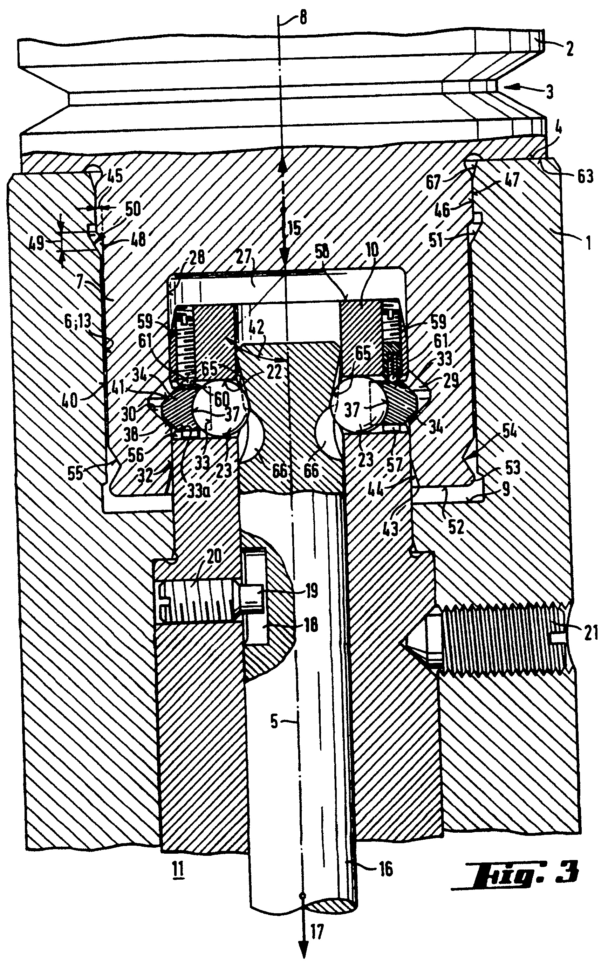

Der an die Stirnseite 4 der Antriebsspindel 1 angrenzende, randseitige Vorderbereich der Ausnehmung 6 ist als Zylinderringabsatz 45 ausgebildet. Der Zylinderringabsatz 45 weist einen Innendurchmesser auf, der größer ist als der Innendurchmesser der Innenumfangswand 13 der Ausnehmung 6 in deren dem Boden 9 weiter angenähertem Bereich. Die Innenumfangswand des Zylinderringabsatzes 45 bildet einen Paßsitz für einen entsprechenden Ringvorsprung 47 des Werkzeugkopfschaftes 7. Der Ringvorsprung 47 des Werkzeugkopfschaftes 7 ist außerhalb des rohrartig ausgebildeten Endbereiches 26 des Werkzeugkopfschaftes 7 angeordnet. In Einlagestellung (Fig. 3, 4) endet der Ringvorsprung 47 des Werkzeugkopfschaftes 7 zur Bildung eines Freiraumes 48 mit Axialabstand 49 vor der Stirnfläche 50 des Zylinderringabsatzes 45.

Zwischen der Innenumfangswand 46 des Ringabsatzes 45 und der Innenumfangswand 13 der Ausnehmung 6 der Antriebsspindel 1 ist eine innenkonusartige, als Einführungsfase wirksame Übergangsringfläche 51 angeordnet. An das stirnseitige Ende 52 des Werkzeugkopfschaftes 7 ist ein Ringwulst 53 angeformt, dessen Außendurchmesser kleiner ist als der Außendurchmesser des Außenumfanges 40 des Werkzeugkopfschaftes 7. Der Umfang des Ringwulstes 53 ist durch eine Ringnut 54 vom Außenumfang 40 des Werkzeugkopfschaftes 7 separiert. Die in den Außenumfang 40 des Werkzeugkopfschaftes 7 übergehende Flanke 55 der Ringnut 54 weist die Umfangsform eines Kegelstumpfes auf.

Die Spannelemente 34 stehen in ihrer nicht auseinandergespreizten Ruhestellung (Fig. 2) nicht über die Umfangsfläche 32 des Spannkopfes 10 hinaus.

Die Spannelemente 34 weisen einen in eine radial nach außen gerichtete Führung 56 an der unteren Seitenwand 33a der Ringnut 33 eingreifenden Axialfortsatz 57 auf, um eine lediglich in radialer Spreizrichtung 39 und zurück mögliche Beweglichkeit der Spannelemente 34 zu gewährleisten.

Am Spannkopf 10 ist eine den radialen Verschiebeweg der Spannelemente 34 in Spreizrichtung 39 limitierende Begrenzungseinrichtung vorgesehen. Diese besteht aus von der Stirnseite 58 des Spannkopfes 10 her eingeschraubte Madenschrauben 59, die mit ihren Vorderenden 60 durch die obere Seitenwand der Ringnut 33 des Spannkopfes 10 hindurchschraubbar sind und in den radialen Verschiebeweg der Spannelemente 34 hineinstehen. Die Vorderenden 60 der Schrauben 59 sind dabei durch in Einschraubrichtung (= Spannrichtung 17) federbeaufschlagte Kugeln 61 gebildet. Diese Kugeln beaufschlagen in Lösestellung des Werkzeugkopfes 2 und dementsprechend bei in Ruhestellung befindlichen Spannelementen 34 (Fig. 2) die Fasflächen 41 der Spannelemente 34 nach Art eines Kugelrastgesperres.

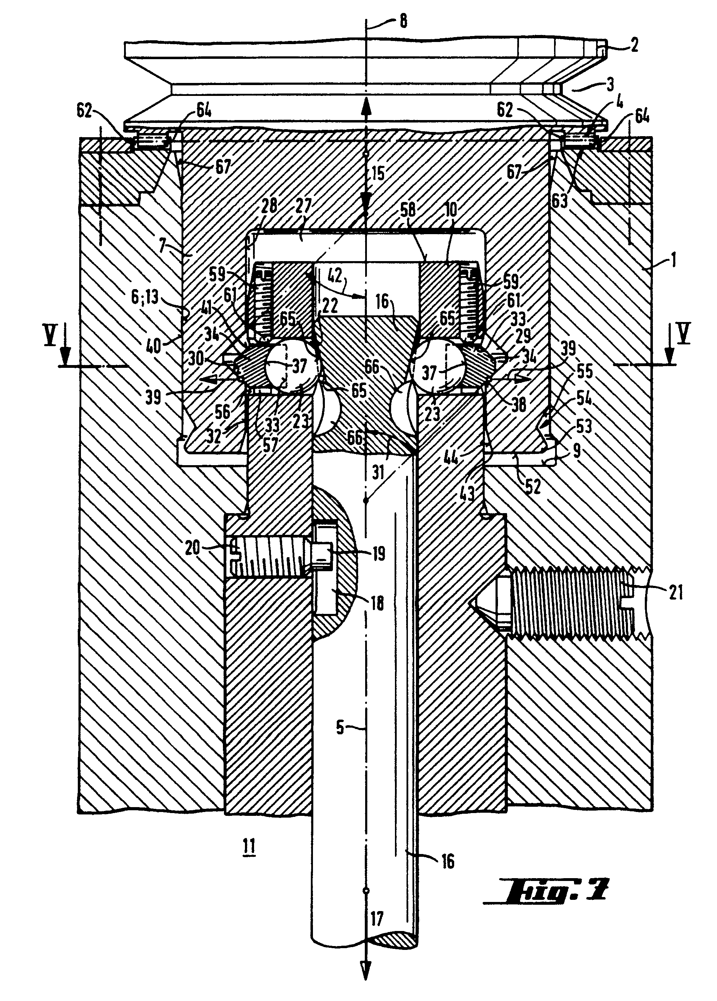

Bei der modifizierten Ausführungsform gemäß Fig. 7 trägt die Stirnseite 4 der Antriebsspindel 1 eine Hirth-Verzahnung 62, in die eine an der Gegenfläche 63 des Werkzeugkopfes 2 angeordnete Gegen-Hirth-Verzahnung 64 in Einschub- bzw. Spannstellung (Fig. 3, 4) eingreift. Bei dieser Ausführungsform übernimmt die Hirth-Verzahnung 62, 64 die Feinzentrierung des Werkzeugkopfes 2 gegenüber der Antriebsspindel 1, so daß dort eine Feinzentrierung durch Ringabsatz 45 und Ringvorsprung 47 entfallen kann. Am oberen, werkzeugseitigen Rand der Ausnehmung 6 ist eine Fase 67 angeordnet.

Bei den abgebildeten Ausführungsformen sind drei vereinzelte Spannelemente 34 vorgesehen. Diese können jedoch auch zu einem einstückigen, einseitig offenen, radial aufspreizbaren und in der den Spannkopf 10 umgebenden Ringnut 33 einliegenden Spannring zusammengefaßt sein, der zwar in den Figuren nicht dargestellt ist, jedoch in seiner unmittelbaren Wirkung dem Spannring der Ausführungsform von Fig. 1 und 3 von EP-A-0244770 entspricht.

Am freien, oberen Ende der Spannstange 16 sind sich in Zugrichtung 17 der Spindeldrehachse 5 annähernde Spannkonusflächen 65 ausgebildet. An das untere Ende der Spannkonusflächen 65 angrenzend sind Rastmulden 66 zur Aufnahme der Spannkugeln 23 in Ruhestellung angeordnet.

Die Ausgangsstellung zum Spannen des Werkzeugkopfes 2 an der Antriebsspindel 1 ist in Fig. 2 dargestellt. Zunächst wird der Werkzeugkopf 2 mit seinem Schaft 7 in die Ausnehmung 6 der Antriebsspindel 1 eingeschoben, bis die stirnseitige Gegenfläche 63 des Werkzeugkopfes 2 an die Stirnseite 4 der Antriebsspindel 1 anschlägt. Dies ist die Spannausgangsstellung. In dieser Spannausgangsstellung wird die Spannstange 16 in Spannrichtung 17 angezogen. Dabei treten die Spannkugeln 23 aus den Rastmulden 66 der Spannstange 16 aus. Sie werden vom Umfang der Spannkonusflächen 65 beaufschlagt und in Spreizrichtung 39 auseinandergespreizt. Die Spreizausgangsstellung ist in Fig. 3 dargestellt. Mit zunehmender Zugbewegung der Spannstange 16 in Spannrichtung 17 werden die auf ihrer Innenseite 35 von den Spannkugeln 23 beaufschlagten Spannelemente 34 ebenfalls in Spreizrichtung 39 verdrängt. Dabei legen sich ihre Spannoberflächen 38 an die Nutseitenwand 30 der Innenringnut 29 des Werkzeugkopfschaftes 7 an. Sie erzeugen dabei sowohl einen axial in Spannrichtung 17 als auch einen radial in Spreizrichtung 39 wirkenden Innendruck auf den Werkzeugschaft 7. Durch den Spreizdruck in Spreizrichtung 39 wird der Endbereich 26 des Werkzeugkopfschaftes 7 in der Umgebung der Innenringnut 29 leicht nach außen aufgedehnt. Diese Aufdehnung liegt im elastischen Verformungsbereich. Wegen der relativ engen Passung zwischen dem Außenumfang 40 des Werkzeugkopfschaftes 7 und der Innenumfangswand 13 der Ausnehmung 6 der Antriebsspindel 1 reicht diese Aufdehnung jedoch zur Erzeugung eines sicheren Kraftschlusses zwischen Werkzeugkopfschaft 7 und Antriebsspindel 1 aus. Dabei wird die genaue Passung durch das Zusammenwirken von Ringabsatz 45 und Ringvorsprung 47 von Antriebsspindel 1 und Werkzeugkopf 2 bewirkt (Fig. 1 bis 6). Bei der modifizierten Ausführungsform gemäß Fig. 7 wird diese genaue Zentrierung durch das Zusammenwirken der Hirth-Verzahnungen 62, 64 bewerkstelligt.

Zum Lösen der Spannverbindung wird die Spannstange 16 entgegen ihrer Spannrichtung 17 in Axialrichtung 15 verschoben, bis die Spannkugeln 23 wieder in den Rastmulden 66 am oberen Ende der Spannstange 16 einliegen, wodurch die Ruhestellung der Spanneinrichtung markiert ist. Nunmehr bzw. bereits während dieser Vorschubbewegung der Spannstange 16 wird der Werkzeugkopf 2 von einem in der Griffnut 3 angreifenden Roboterarm entgegen der Spannrichtung 17 abgezogen. Dabei drückt die Nutseitenwand 30 der Innenringnut 29 über die Spannoberflächen 38 die Spannelemente 34 in Radialrichtung nach innen, bis die Spannelemente 34 nicht mehr über die Umfangsfläche 32 des Spannkopfes 10 hinausstehen und dadurch nicht mehr ein vollständiges Abziehen des Werkzeugkopfschaftes 7 behindern. In dieser Stellung beaufschlagen bereits die Kugeln 61 der Madenschrauben 59 nach Art eines Kugelrastgesperres die Fasflächen 41 der Spannelemente 34. Sie halten dadurch die Spannelemente 34 in ihrer Ruhestellung verliersicher, auch wenn beispielsweise in dieser Stellung die Antriebsspindel 1 Rotationsbewegungen vollzieht und dadurch Zentrifugalkräfte auf die Spannelemente 34 einwirken. Mit dem Herausführen des Werkzeugkopfschaftes 7 aus der Ausnehmung 6 der Antriebsspindel 1 steht die Ausnehmung 6 zur Aufnahme eines neuen, mit einem anderen Werkzeug bestückten Werkzeugkopfes 2 zur Verfügung. Es beginnt wieder ein neuer Spannvorgang in der beschriebenen Weise. Damit ist ein Zyklus des Werkzeugkopfwechsels abgeschlossen.

Bezugszeichenliste

| | |
|---|---|
| 1 | Antriebsspindel |
| 2 | Werkzeugkopf |
| 3 | Griffnut |
| 4 | Stirnseite |
| 5 | Spindeldrehachse |
| 6 | Ausnehmung |
| 7 | Schaft |
| 8 | Rotationsachse |
| 9 | Boden |
| 10 | Spannkopf |
| 11 | Werkzeugmaschinenseite |
| 12 | Abstand |
| 13 | Innenumfangswand |
| 14 | Zwischenraum |
| 15 | Axialrichtung |
| 15a | Umfangsrichtung |
| 16 | Spannstange |
| 17 | Spannrichtung |
| 18 | Längsnut |
| 19 | Einschraubende |
| 20 | Madenschraube |

| 21 | Fixierschraube |
| 22 | Führungsbohrung |
| 23 | Spannkugel |
| 24 | Achse |
| 25 | Winkel |
| 26 | Endbereich |
| 27 | Innenraum |
| 28 | Innenzylinderfläche |
| 29 | Innenringnut |
| 30 | Nutseitenwand |
| 31 | Winkel |
| 32 | Umfangsfläche |
| 33 | Ringnut |
| 33a | untere Seitenwand |
| 34 | Spannelemente |
| 35 | Innenseite |
| 36 | Abstand |
| 37 | Einlagemulde |
| 38 | Spannoberfläche |
| 39 | Spreizrichtung |
| 40 | Außenumfang |
| 41 | Fasenfläche |
| 42 | spitzer Winkel |
| 43 | Öffnungsrand |
| 44 | Fase |
| 45 | Zylinderringabsatz |
| 46 | Innenumfangswand |
| 47 | Ringvorsprung |
| 48 | Freiraum |
| 49 | Axialabstand |
| 50 | Stirnfläche |
| 51 | Übergangsfläche |
| 52 | Ende |
| 53 | Ringwulst |
| 54 | Ringnut |
| 55 | Flanke |
| 56 | Führung |
| 57 | Axialfortsatz |
| 58 | Stirnseite |
| 59 | Madenschraube |
| 60 | Vorderende |
| 61 | Kugel |
| 62 | Hirth-Verzahnung |
| 63 | Gegenfläche |
| 64 | Gegen-Hirth-Verzahnung |
| 65 | Spannkonus |
| 66 | Rastmulde |
| 67 | Fase |

**Patentansprüche**

1. Vorrichtung zum Wechseln und Spannen eines Werkzeugkopfes (2) an der Antriebsspindel (1) einer Werkzeugmaschine,

— mit einer an der Stirnseite (4) der Antriebsspindel (1) angeordneten, zur Spindeldrehachse (5) koaxialen Ausnehmung (6) für die Aufnahme eines in Axialrichtung vorstehenden Schaftes (7) des Werkzeugkopfes (2) und

— mit einem aus dem Boden (9) der Ausnehmung (6) zentrisch hinausstehenden, um sich herum durch

6

entsprechenden Abstand (12) zur Innenumfangswand (13) der Ausnehmung (6) einen ringförmigen Zwischenraum (14) in der Ausnehmung (6) freihaltenden Spannkopf (10) einer von der Werkzeugmaschinenseite her betätigten Spanneinheit, wobei

— der Schaft (7) des Werkzeugkopfes (2) in Axialrichtung (15) in den ringförmigen Zwischenraum (14) der Spindelausnehmung (6) einführbar und darin Zentriert angeordnet durch die Spanneinheit verspannbar ist und

— der Spannkopf (10) der Spanneinheit eine in Axialrichtung (15) der Antriebsspindel (1) verschiebbare Spannstange (16) lagert und von radialen Führungsbohrungen (22) durchsetzt ist,

-- in denen jeweils eine Spannkugel (23) einliegt, die durch eine axiale Zugbewegung der Spannstange (16) radial nach außen auseinandergespreizt werden und damit die Werkzeugkopfverspannung bewirken, dadurch gekennzeichnet,

a) daß der Werkzeugkopfschaft (7) mindestens in seinem freien Endbereich als Rohrkörper ausgebildet und auf seiner Innenringfläche (28) mit einer Innenringnut (29) versehen ist,

— die auf ihrer werkzeugmaschinenseitigen Anzugseite eine nach Art eines Innenkonus geneigte, mit der Achse (5) der Antriebsspindel (1) einen spitzen, sich in Spannrichtung (17) schließenden Winkel (31) bildende Nutseitenwand (30) aufweist,

b) daß in der Umfangsfläche (32) des Spannkopfes (10) vertieft, in axialer Richtung (15) unverschiebbar, jedoch in radialer Richtung auseinanderspreizbar Spannelemente (34) einliegen,

— die mit entsprechend der innenkonusförmigen Nutseitenwand (30) der Innenringnut (29) als Außenkonussegmente geformten Spannoberflächen (38) versehen sind,

c) daß die Spannkugeln (23) an der Innenseite (35) jeweils eines Spannelementes (34) anliegen derart, daß bei radialem Auseinanderspreizen der Spannkugeln (23) die Spannelemente (34) sowohl einen axial in Spannrichtung (17) als auch einen radial in Spreizrichtung (39) wirkenden Innendruck auf den sich dadurch aufweitenden und in der Ausnehmmung (6) verspannenden Werkzeugkopfschaft (7) ausüben und

d) daß der Außenumfang (40) des Werkzeugkopfschaftes (7) als zylindrischer Paßzapfen ausgebildet ist, der mit Gleitsitz in die als zylindrische Bohrung ausgebildete Ausnehmung (6) der Antriebsspindel (1) einführbar ist.

2. Vorrichtung nach Anspruch 1, dadurch gekennzeichnet, daß die Spannelemente (34) auf ihrer den Spannoberflächen (38) abgewandten Seite jeweils mit einer konussegmentartigen Fasfläche (41) versehen sind, die mit der Achse (5) der Antriebsspindel (1) einen spitzen, sich in Richtung auf den Werkzeugkopf (2) schließenden Winkel (42) bilden.

3. Vorrichtung nach Anspruch 1 oder 2 dadurch gekennzeichnet, daß der Öffnungsrand (43) des Innenraums (27) des Werkzeugkopfschaftes (2) mit einer abgeschrägten Fase (44) versehen ist.

4. Vorrichtung nach einem oder mehreren der vorhergehenden Ansprüche, gekennzeichnet durch einen an die Stirnseite (4) der Antriebsspindel (1) angrenzenden, den randseitigen Vorderbereich ihrer Ausnehmung (6) bildenden Ringabsatz (45) mit größerem Innendurchmesser als dem Innendurchmesser der Innenumfangswand (13) der Ausnehmung (6), wobei die Innenumfangswand (46) des Ringabsatzes (45) einen Paßsitz für einen einliegenden Ringvorsprung (47) des Werkzeugkopfschaftes (7) bildet.

5. Vorrichtung nach Anspruch 4, dadurch gekennzeichnet, daß der Ringvorsprung (47) des Werkzeugkopfschaftes (7) außerhalb des rohrartig ausgebildeten Endbereiches (26) des Werkzeugkopfschaftes (7) angeordnet ist.

6. Vorrichtung nach Anspruch 4 oder 5, dadurch gekennzeichnet, daß der Ringvorsprung (47) des Werkzeugkopfschaftes (7) in Einlagestellung zur Bildung eines Freiraumes (48) mit Axialabstand (49) vor der Stirnfläche (50) des Ringabsatzes (45) endet.

7. Vorrichtung nach einem oder mehreren der vorhergehenden Ansprüche, gekennzeichnet durch eine innenkonusartige, als Einführungsfase wirksame übergangsringfläche (51) zwischen der Innenumfangswand (46) des Ringabsatzes (45) und der Innenumfangswand (13) der Ausnehmung (6) der Antriebsspindel (1).

8. Vorrichtung nach einem oder mehreren der vorhergehenden Ansprüche, gekennzeichnet durch einen an das stirnseitige Ende (52) des Werkzeugkopfschaftes (7) angeformten Ringwulst (53),

— dessen Außendurchmesser kleiner ist als der Außendurchmesser des Außenumfanges (40) des Werkzeugkopfschaftes (7) und

— dessen Umfang durch eine Ringnut (S4) vom Außenumfang (40) des Werkzeugkopfschaftes (7) separiert ist.

9. Vorrichtung nach Anspruch 8, dadurch gekennzeichnet, daß die in den Außenumfang (40) des Werkzeugkopfschaftes (7) übergehende Flanke (55) der Ringnut (54) die Umfangsform eines Kegelstumpfes aufweist.

10. Vorrichtung nach Anspruch 1, dadurch gekennzeichnet,
daß die Spannelemente (34) in einer in die Umfangsfläche (32) des Spannkopfes (10) eingebrachten Ringnut (33) einliegen und in ihrer nicht auseinandergespreizten Ruhestellung (Fig. 2) nicht über die Umfangsfläche (32) hinausstehen.

11. Vorrichtung nach Anspruch 10, gekennzeichnet durch
mindestens einen an die Spannelemente (34) angeformten, in eine radial nach außen gerichtete Führung (56) an einer Seitenwand der Ringnut (33) eingreifenden Axialfortsatz (57).

12. Vorrichtung nach Anspruch 10 oder 11, gekennzeichnet durch
eine am Spannkopf (10) angeordnete, den radialen Verschiebeweg der Spannelemente (34) in Spreizrichtung (39) limitierende Begrenzungseinrichtung.

13. Vorrichtung nach Anspruch 12, dadurch gekennzeichnet,
daß vom Stirnende (58) des Spannkopfes (10) her eingeschraubte Schrauben, insbesondere Madenschrauben (59), mit ihren Vorderenden (60) durch eine Seitenwand der Ringnut (33) des Spannkopfes (10) hindurchschraubbar sind und in den radialen Verschiebeweg der Spannelemente (34) hineinstehen.

14. Vorrichtung nach Anspruch 13, dadurch gekennzeichnet,
daß die Vorderenden (60) der Schrauben (59) durch in Einschraubrichtung federbeaufschlagte Kugeln (61) gebildet sind und nach Art eines Kugelrastgesperres die Fasflächen (41) der Spannelemente (34) beaufschlagen.

15. Vorrichtung nach einem der Ansprüche 1 bis 3 und 8 bis 14, dadurch gekennzeichnet,
daß die Stirnseite (4) der Antriebsspindel eine Hirth-Verzahnung (62) aufweist, in die eine an der Gegenfläche (63) des Werkzeugkopfes (2) angeordnete Gegen-Hirth-Verzahnung eingreift.

16. Vorrichtung nach einem oder mehreren der vorhergehenden Ansprüche, dadurch gekennzeichnet,
daß die Spannelemente (34) zu einem einstückigen, einseitig offenen, radial aufspreizbaren und in der den Spannkopf (10) umgebenden Ringnut (33) einliegenden Spannring zusammengefaßt sind.

17. Vorrichtung nach einem oder mehreren der vorhergehenden Ansprüche, dadurch gekennzeichnet,
daß die Spannkugeln (23) die Spannelemente (34) in an deren Innenseiten (35) angebrachten Einlagemulden (37) flächenförmig beaufschlagen.

18. Vorrichtung nach Anspruch 1, dadurch gekennzeichnet,
daß das freie Ende der Spannstange (16) als sich in Zugrichtung schließender Spannkonus (65) ausgebildet ist und daß an das innere Ende des Spannkonus (65) angrenzend Rastmulden (66) zur Aufnahme der Spannkugeln (23) in deren eingezogener Ruhestellung am Spannstangenumfang angeordnet sind.


## Revendications

1. Dispositif pour changer et serrer une tête d'outil (2) sur la broche d'entraînement (1) d'une machine-outil,
— comprenant un évidement (6) disposé dans la face frontale (4) de la broche d'entraînement (1), coaxial à l'axe de rotation (5) de la broche, destiné à recevoir la queue (7) de la tête d'outil (2) qui fait saillie dans la direction axiale, et
— une tête de serrage (10), appartenant à une unité de serrage actionnée par la machine-outil, et qui fait saillie en position centrale sur le fond (9) de l'évidement (6) en laissant libre tout autour d'elle dans l'évidement (6) une cavité intermédiaire annulaire (14), due à la présence d'une distance d'écartement appropriée (12) par rapport à la paroi périphérique intérieure (13) de l'évidement (6), dans lequel
— la queue (7) de la tête d'outil (2) peut être introduite dans la direction axiale (15) dans la cavité intermédiaire annulaire (14) de l'évidement (6) de la broche et peut être serrée par l'unité de serrage dans une position centrée, et
— la tête de serrage (10) de l'unité de serrage renferme une tirette (16) qu'on peut faire coulisser dans la direction axiale (15) de la broche d'entraînement (1) et qui est traversée par des perçages de guidage radiaux (22),
– – dans chacun desquels est placée l'une de plusieurs billes de serrage (23) qui s'écartent radialement les unes des autres sous l'action d'un mouvement de traction axial de la tirette (16), et déterminent de cette façon le blocage de la tête d'outil, caractérisé
a) en ce que la queue (7) de la tête d'outil forme un corps tubulaire au moins dans sa région d'extrémité libre et est munie, sur sa surface annulaire intérieure (28), d'une gorge annulaire intérieure (29),
— qui présente, sur son côté de traction, côte machine-outil, un flanc de gorge (30) incliné à la façon d'un cône intérieur, et qui forme avec l'axe (5) de la broche d'entraînement (1) un angle aigu (31) qui se ferme dans le sens (17) du serrage,
b) en ce que des éléments de serrage (34) sont logés encastrés dans la surface circonférentielle (32) de

8

la tête de serrage (10), immobilisés en translation dans la direction axiale (15) mais libres de s'écarter les uns des autres dans une direction radiale,

— éléments qui sont munis de surfaces de serrage (38) présentant la forme de segments de cônes extérieurs, d'une façon qui correspond au flanc (30) en forme de cône intérieur de la gorge annulaire intérieure (29),

c) en ce que les billes de serrage (23) sont appuyées la contre face interne (35) d'éléments de serrage (34) respectifs de telle sorte que, en réponse à l'écartement radial mutuel des billes de serrage (23) les unes par rapport aux autres, les éléments de serrage (34) exercent sur la queue (7) de la tête de l'outil, qui se dilate sous cet effet et se bloque dans l'évidement (6) une pression intérieure agissant axialement dans le sens (17) du serrage aussi bien qu'une pression intérieure agissant radialement dans le sens (39) de l'écartement, et

d) la périphérie extérieure (40) de la queue (7) de la tête d'outil est constituée par un tenon ajusté cylindrique qui peut être introduit à ajustement glissant dans l'évidement (6) de la broche d'entraînement (1) qui est constituée par un perçage cylindrique.

2. Dispositif selon la revendication 1, caractérisé

en ce que les éléments de serrage (34) sont munis chacun sur sa face qui est la plus éloignée des surfaces de serrage (38), d'une surface chanfreinée (41) en forme de segment de cône, qui forment avec l'axe (5) de la broche d'entraînement (1), un angle aigu (42) qui se ferme vers la tête d'outil (2).

3. Dispositif selon la revendication 1 ou 2, caractérisé

en ce que le bord d'ouverture (43) de la cavité intérieure (27) de la queue (2) de la tête d'outil est muni d'un chanfrein biseauté (44).

4. Dispositif selon une ou plusieurs des revendications précédentes, caractérisé

par un chambrage annulaire (45) qui fait suite à la face frontale (4) de la broche d'entraînement (1) et qui forme la région avant latérale de son évidement (6), et qui possède un diamètre intérieur supérieur au diamètre intérieur de la paroi périphérique intérieure (13) de l'évidement (6), la paroi périphérique intérieure (46) du chambrage annulaire (45) formant une portée ajustée pour une saillie annulaire (7) de la queue (7) de la tête de l'outil qui s'y loge.

5. Dispositif selon la revendication 4, caractérisé

en ce que la saillie annulaire (47) de la queue (7) de la tête d'outil est disposée à l'extérieur de la région d'extrémité (26), de configuration tubulaire, de la queue (7) de la tête d'outil.

6. Dispositif selon la revendication 4 ou 5, caractérisé

en ce que, dans la position de montage, la saillie annulaire (47) de la queue (7) de la tête d'outil se termine à une certaine distance axiale (49) airant d'atteindre la surface frontale (50) du chambrage annulaire (45), pour laisser un espace libre (48).

7. Dispositif selon une ou plusieurs des revendications précédentes, caractérisé

par une surface annulaire de raccordement (51), en forme de cône intérieur, agissant comme chanfrein d'entrée, comprise entre la paroi périphérique intérieure (46) du chambrage annulaire (45) et la paroi périphérique intérieure (13) de l'évidement (6) de la broche d'entraînement (1).

8. Dispositif selon une ou plusieurs des revendications précédentes, caractérisé

par un bourrelet annulaire (53) formé sur l'extrémité frontale (52) de la queue (7) de la tête d'outil,

— dont le diamètre extérieur est plus petit que le diamètre extérieur de la périphérie extérieure (40) de la queue (7) de la tête d'outil,

— dont la périphérie est séparée de la périphérie extérieure (40) de la queue (7) de la tête d'outil par une gorge annulaire (54).

9. Dispositif selon la revendication 8, caractérisé

en ce que le flanc (55) de la gorge annulaire (54) qui se termine dans la périphérie extérieure (40) de la queue (7) de la tête d'outil présente la forme périphérique d'un tronc de cône.

10. Dispositif selon la revendication 1, caractérisé

en ce que les éléments de serrage (34) se logent dans une gorge annulaire (33) pratiquée dans la surface périphérique (32) de la tête de serrage (10) et ne font pas saillie au-delà de la surface périphérique (32) dans leur position de repos non écartée (figure 2).

11. Dispositif selon la revendication 10, caractérisé

par au moins une protubérance axiale (57) formée sur les éléments de serrage (34) qui s'engagent dans un guidage (56) dirige radialement vers l'extérieur, sur une paroi latérale de la gorge annulaire (33).

12. Dispositif selon la revendication 10 ou 11, caractérisé

par un dispositif limitateur, agence sur la tête de serrage (10), qui limite la course de translation radiale des éléments de serrage (34) dans le sens (39) de l'écartement.

13. Dispositif selon la revendication 12, caractérisé

en ce que des vis vissées en partant de l'extrémité frontale (58) de la tête de serrage (10), en particulier des vis sans tête (59), peuvent être engagées par leurs extrémités avant (60) à travers une paroi latérale de la gorge annulaire (33) de la tête de serrage (10) et font saillie sur le trajet de translation radiale des éléments de serrage (34).

14. Dispositif selon la revendication 13, caractérisé
en ce que les extrémités avant (60) des vis (59) sont formées par des billes (61) chargées par des ressorts dans le sens du vissage et sollicitent les surfaces chanfreinées (41) des éléments de serrage (34) à la façon d'un verrouillage à bille.

15. Dispositif selon une des revendications 1 à 3, et 8 à 14, caractérisé
en ce que la face frontale (4) de la broche d'entraînement présente une denture de Hirth (62) dans laquelle s'engage une denture de champs conjuguée prévue sur la surface conjuguée (63) de la tête d'outil (2).

16. Dispositif selon une ou plusieurs des revendications précédentes, caractérisé
en ce que les éléments de serrage (34) sont réunis en une bague de serrage en une seule pièce, s'ouvrant d'un côté, pouvant se dilater radialement, et qui est logée dans la gorge annulaire (33) qui entoure la tête de serrage (10).

17. Dispositif selon une ou plusieurs des revendications précédentes, caractérisé
en ce que les billes de serrage (23) sollicitent les éléments de serrage (34) par surface intégrale dans des empreintes réceptrices (37) ménagées sur leur face intérieure (35).

18. Dispositif selon la revendication 1, caractérisé
en ce que l'extrémité libre de la tirette (16) forme un cône de serrage (65) qui se ferme dans le sens de la traction et en ce que des empreintes de verrouillage (66), qui se raccordent à l'extrémité intérieure du cône de serrage (66) sont disposées le long de la périphérie de la tirette pour recevoir les billes de serrage (23) dans leur position de repos rétractée.

## Claims

1. Apparatus for exchanging and clamping a tool head (2) on the drive spindle (1) of a machine tool,
— with a recess (6) arranged on the front end (4) of the drive spindle (1) which is coaxial with the axis of rotation (5) of the spindle, for receiving a shaft (7) projecting in the axial direction of the tool head (2) and
— with a clamping head (10) of a clamping unit actuated from the machine tool side, which clamping head projects centrally from the bottom (9) of the recess (6) and leaves free around it an annular gap (14) in the recess (6) by means of an appropriate spacing (12) from the inner peripheral wall (13) of the recess (6), wherein
— the shaft (7) of the tool head (2) can be inserted in the axial direction (15) into the annular gap (14) of the spindle recess (6) and can be clamped therein, centrally arranged, by the clamping unit and wherein
— the clamping head (10) of the clamping unit carries a clamping rod (16) displaceable in the axial direction (15) of the drive spindle (1) and is traversed by radial guide bores (22),
- - wherein there lies, in each, one clamping ball (23) radially moved apart by an axial drawing movement of the clamping rod (16) therewith obtaining the clamping of the tool head characterized in that
a) the tool head shaft (7) is designed at least in its free end zone as a tubular body and is provided on its inner annular surface (23) with an inner annular groove (29),
— which has on its machine tool side, a groove side wall (30) inclined the manner of an internal cone and forming, with the axis (5) of the drive spindle (1), an acute angle (31) narrowing in the clamping direction (17),
b) clamping elements (34) are enclosed, recessed into the peripheral surface (32) of the clamping head (10), which elements cannot be displaced in the axial direction (15) but which can be moved apart in the radial direction,
— which elements are provided with clamping surfaces (38) corresponding to the internal conical shape of the groove side wall (30) of the internal annular groove (29) formed as external conical segments,
c) that the clamping balls (23) bear on the inner sides (35) of each clamping element (34) in such a way that, in the radial separation of the clamping balls (23), the clamping elements (34) exert internal pressure acting both axially in the clamping direction (17) and radially in the expanding direction (39) on the tool head shaft (7) which is expanded and clamped thereby and
d) that the tool head shaft (7) is designed as a cylindrical fitting pin which can be inserted with a sliding fit into the recess (6) designed as a cylindrical bore of the drive spindle (1).

2. Apparatus according to claim 1, characterized in that
the clamping elements (34) are each provided on their side remote from the clamping surfaces (38) with a chamfered surface (41) in the manner of a conical segment which form, together with the axis (5) of the drive spindle (1), an acute angle (42) narrowing towards the tool head (2).

3. Apparatus according to claim 1 or 2, characterized in that
the edge (43) of the opening of the inner space (27) of the tool head shaft (7) is provided with an oblique chamfer (44).

4. Apparatus according to one or more of the preceding claims, characterized by
an annular offset (45) with a larger inner diameter than the inner diameter of the internal peripheral wall (13) of the recess (6) adjoining the front end (4) of the drive spindle (1) and forming the front edge zone of its recess (6), the internal peripheral wall (46) of the annular offset (45) forming a fitting seat for an angaging annular projection (47) of the tool head shaft (7).

5. Apparatus according to claim 4, characterized in that
the annular projection (47) of the tool head shaft (7) is arranged outside the tubular end zone (26) of the tool head shaft (7).

6. Apparatus according to claim 4 or 5, characterized in that
the annular projection (47) of the tool head shaft (7) terminates in the inserted position with an axial spacing (49) in front of the face (50) of the annular offset (45) so as to form a free space (48).

7. Apparatus according to one or more of the preceding claims, characterized by
a transitional inner surface (51) in the manner of an internal cone acting as an insertion bevel between the internal peripheral wall (46) of the annular offset (45) and the internal peripheral wall (31) of the recess (6) of the drive spindle (1).

8. Apparatus according to one or more of the preceding claims, characterized by
an annular bead (53) formed on the front end (52) of the tool head shaft (7),

— the outer diameter of which bead is smaller than the outer diameter of the outer periphery (40) of the tool head shaft (7) and

— the periphery of which bead is separated from the outer periphery (40) of the tool head shaft (7) by an annular groove (54).

9. Apparatus according to claim 8, characterized in that
the side (55) of the annular groove (54) passing into the outer periphery (40) of the tool head shaft (7) has the peripheral shape of a cone frustum.

10. Apparatus according to claim 1, characterized in that
the clamping elements (34) are enclosed in a peripheral groove (33) introduced into the peripheral surface (32) of the clamping head (10) and that in their non-straddled rest position (Figure 2), they do not project beyond the peripheral surface (32).

11. Apparatus according to claim 10, characterized by
at least one axial extension (57) formed on the clamping elements (34) and engaging in an outwardly directed guideway (56) on the side wall of the annular groove (33).

12. Apparatus according to claim 10 or 11, characterized by
a limiting device limiting the radial displacement path of the clamping elements (34) in the expanding direction (39).

13. Apparatus according to claim 12, characterized in that
sorews, in particular grub screws (59) screwed from the front end (58) of the clamping head (10), can be screwed with their front ends (60) through a side wall of the annular groove (33) of the clamping head (10) and that they project into the radial displacement path of the clamping elements (34).

14. Apparatus according to claim 13, characterized in that
the front ends (60) of the screws (59) are formed by balls (61) spring-loaded in the screwing-in direction and that they act on the chamfered surfaces (41) of the clamping elements (34) in the manner of a spherical locking mechanism.

15. Apparatus according to one of claims 1 to 3 and 8 to 14, characterized in that
the front end (4) of the drive spindle (1) has a serration (62) engaging in a mating serration arranged on the mating surface (63) of the tool head (2).

16. Apparatus according to one or more of the preceding claims, characterized in that
the clamping elements (34) are combined in an integral clamping ring open at one side that can be radially expanded and which is enclosed in the annular groove (33) surrounding the clamping head (10).

17. Apparatus according to one or more of the preceding claims, characterized in that
the clamping balls (23) act area-wise on the clamping elements (34) in inserted depressed portions (37) arranged on the inner sides (35) of the clamping elements.

18. Apparatus according to claim 1, characterized in that
the free end of the clamping rod (16) is designed as a clamping cone (65) tapering in the drawing direction and in that engagement hollows (66) adjoining the inner end of the clamping cone (65) are arranged on the periphery of the clamping rod for receiving the clamping balls (23) in their retracted rest position.

*Fig. 1*

Fig. 2

Fig. 3

*Fig. 4*

Fig. 5

Fig. 6

EP 0 310 942 B1

**Fig. 7**